# EUROPÄISCHE PATENTSCHRIFT

(11) **EP 3 630 462 B1**
(45) Veröffentlichungstag und Bekanntmachung des Hinweises auf die Patenterteilung: **29.09.2021**
(21) Anmeldenummer: 18729334.5
(22) Anmeldetag: 16.05.2018
(51) Int. Cl.: B29C 65/18, B65B 51/30, B65B 57/00, B65B 51/10

(54) **VERFAHREN ZUM BETRIEB EINER SCHLAUCHBEUTELMASCHINE UND SCHLAUCHBEUTELMASCHINE**
METHOD FOR OPERATING A TUBULAR BAG MACHINE, AND TUBULAR BAG MACHINE
PROCÉDÉ DE COMMANDE D'UNE ENSACHEUSE TUBULAIRE ET ENSACHEUSE TUBULAIRE

(30) Priorität: 23.05.2017 DE 102017208767
(43) Veröffentlichungstag der Anmeldung: 08.04.2020
(73) Patentinhaber: Rovema GmbH, 35463 Fernwald (DE)
(72) Erfinder: KUSS, Gerhard, 35584 Wetzlar (DE)
(74) Vertreter: advotec.
(86) Internationale Anmeldenummer: PCT/EP2018/062712
(87) Internationale Veröffentlichungsnummer: WO 2018/215258

(56) Entgegenhaltungen:
- EP-A2- 0 368 016
- WO-A2-2012/152403
- DE-A1-102013 203 295
- US-A- 5 653 085

## Beschreibung

Die Erfindung betrifft ein Verfahren zum Betrieb einer Schlauchbeutelmaschine nach dem Oberbegriff des Anspruchs 1. Weiter betrifft die Erfindung eine Schlauchbeutelmaschine zur Durchführung des erfindungsgemäßen Verfahrens.

Schlauchbeutelmaschinen sind gattungsgemäß mit einer Antriebssteuerung ausgestattet, die mehrere elektronische Antriebseinheiten unabhängig voneinander ansteuern kann. Dadurch wird es möglich, die verschiedenen Funktionselemente der Verpackungsmaschine, insbesondere die Siegeleinheiten, beim Abfahren von vordefinierten Bewegungsabläufen taktzeitsynchron anzutreiben. Eine derartige Schlauchbeutelmaschine ist beispielsweise aus der DE 10 2013 203 295 A1 oder der WO 2012/152403 A2 bekannt.

Das erfindungsgemäße Verfahren ist auf den Betrieb der Quersiegeleinheit einer Schlauchbeutelmaschine gerichtet. Die Quersiegeleinheit gattungsgemäßer Schlauchbeutelmaschinen umfasst zumindest einen Antriebsmotor, mit dem zwei relativ zueinander antreibbare Quersiegelbacken angetrieben werden können. Der Antriebsmotor kann beispielsweise in der Art eines Servomotor, eines Getriebe-Servomotors oder eines Torquemotors ausgebildet sein. Mittels der Quersiegelbacken werden die Folienschläuche bei der Herstellung der Schlauchbeutel quer zur Förderrichtung verschweißt. Dazu werden die Quersiegelbacken unter Einschluss der Folienbahn des Schlauchbeutels zusammengefahren und durch Einbringen von Prozesswärme verschweißt. Beim Verschweißen der Schlauchbeutel mit den Quersiegelbacken wird vom Betreiber eine bestimmte Soll-Siegelkraft vorgegeben, mit der die Verpackungsfolie während des Schweißvorgangs zwischen den Quersiegelbacken zusammengepresst werden muss. Um den notwendigen Druck in der Prozesszone beim Verschweißen aufzubringen, müssen die Quersiegelbacken mit dieser vorgegebenen Soll-Siegelkraft zusammengefahren werden. Aus der EP 0 368 016 A2 ist ein gattungsgemäßes Verfahren zur Steuerung der Bewegung der Quersiegelbacken in Abhängigkeit von Anpressdruck, Temperatur und erforderlicher Siegelzeit bekannt. Da die Siegelkraft zwischen den Antriebsbacken regelmäßig nicht oder nur mit einem sehr hohen gerätetechnischen Aufwand gemessen werden kann, wird statt der Siegelkraft bei bekannten Schlauchbeutelmaschinen vielfach das Antriebsmoment des Antriebmotors vorgegeben. Denn das Antriebsmoment des Antriebsmotors kann mit sehr einfachen Mitteln gemessen werden, insbesondere wenn als Antriebsmotoren sogenannte Servomotoren eingesetzt werden.

Neben dem Antriebsmoment wird auch die jeweilige Position des Antriebsmotors gemessen, denn dadurch kann die Vorspannung der Quersiegeleinheit exakt eingestellt werden. Ein gattungsgemäßes Verfahren zur Umrechnung der Position des Antriebsmotors in die Siegelkraft zwischen den Quersiegelbacken in Übereinstimmung mit der Temperatur eines Quersiegelbackens ist aus der US 5 653 085 A bekannt.

Um die für die Siegelung erforderliche Siegelkraft in einfacher Weise in das vom dafür vom Antriebsmotor aufzubringende Antriebsmoment umrechnen zu können, ist in der Antriebssteuerung bekannter Schlauchbeutelmaschinen eine Umrechnungsfunktion vorgesehen, mit der die gewünschte Siegelkraft in das aufzubringende Antriebsmoment umgerechnet werden kann. Die Umrechnungsfunktion kann dabei entweder tabellarisch als Wertepaare von Siegelkraft und Antriebsmoment gespeichert sein oder es ist eine mathematische Umrechnungsfunktion vorhanden, mit der die Siegelkraft und das notwendige Antriebsmoment umgerechnet werden kann.

Ein Problem bei den bekannten Schlauchbeutelmaschinen ist es, dass der Einfluss der Betriebstemperatur der Quersiegelbacken auf die Umrechnung zwischen der jeweils gewünschten Siegelkraft und dem dafür aufzubringenden Antriebsmoment des Antriebsmotors nicht berücksichtigt wird. Denn eine Änderung der Betriebstemperatur der Quersiegelbacken verursacht maßgebliche Maßänderungen der Quersiegelbacken, die das mechanische Verhalten der Quersiegeleinheit, insbesondere die Federelastizität der Quersiegeleinheit beeinflussen. Werden aber alle Siegelprozesse der gleichen Umrechnungsfunktion unabhängig von der Betriebstemperatur der Quersiegelbacken durchgeführt, so stellt dies einen erheblichen Fehlereinfluss dar, da die zwischen den Quersiegelbacken erreichte Siegelkraft in der Praxis aufgrund der Nichtberücksichtigung der Betriebstemperatur von der vorgegebenen Siegelkraft erheblich abweichen kann.

Ausgehend von diesem Stand der Technik ist es Aufgabe der vorliegenden Erfindung, ein neues Verfahren zum Betrieb einer Schlauchbeutelmaschine vorzuschlagen, mit der das oben beschriebene Problem vermieden wird. Weiter ist es Aufgabe der vorliegenden Erfindung, eine Schlauchbeutelmaschine zur Durchführung des erfindungsgemäßen Verfahrens vorzuschlagen.

Diese Aufgabe wird durch ein Verfahren und eine Schlauchbeutelmaschine nach der Lehre der beiden unabhängigen Hauptansprüche gelöst.

Vorteilhafte Ausführungsformen der Erfindung sind Gegenstand der Unteransprüche.

Bei dem erfindungsgemäßen Verfahren wird zunächst die Betriebstemperatur der Quersiegelbacken festgestellt. Dies kann entweder durch Messung der Betriebstemperatur mit einer entsprechenden Sensorik oder durch Eingabe durch das Bedienpersonal erfolgen. Anschließend wird abhängig von der aktuellen Betriebstemperatur eine Umrechnungsfunktion zur Umrechnung der gewünschten Siegelkraft in das notwendige Antriebsmoment des Antriebsmotors ausgewählt oder neu berechnet. Die ausgewählte bzw. neu berechnete Umrechnungsfunktion ist dann exakt auf die aktuelle Betriebstemperatur der Quersiegelbacken abgestimmt. Anschließend wird die Siegelung mit der Quersiegeleinheit mit einem Antriebsmoment durchgeführt, das unter Nutzung der temperaturabhängigen Umrechnungsfunktion aus der gewünschten Soll-Siegelkraft abgeleitet wurde.

Soweit die Feststellung der neuen auf die Betriebstemperatur abgestimmte Umrechnungsfunktion nicht durch Neuberechnung, sondern durch Auswahl von verschiedenen in der Steuerung abgespeicherten Umrechnungsfunktionen erfolgt, ergibt sich das Problem, dass die aktuell gemessene Betriebstemperatur regelmäßig nicht exakt mit den Betriebstemperaturen übereinstimmt, für die die abgespeicherten Umrechnungsfunktionen vorliegen. Um dieses Problem ohne wesentliche Umrechnungsfehler lösen zu können, ist es besonders vorteilhaft, dass in diesen Fällen bei der Berechnung des notwendigen Antriebsmoments zur Erreichung der gewünschten Soll-Siegelkraft zwischen den beiden Umrechnungsfunktionen interpoliert wird, deren jeweils zugeordnete Betriebstemperatur der festgestellten Betriebstemperatur am nächsten liegt.

Ein besonders komfortabler Betrieb ergibt sich, wenn die Betriebstemperatur durch das Bedienpersonal nicht selbst gemessen und in die Steuerung eingegeben werden muss, sondern stattdessen die Betriebstemperatur der Quersiegelbacken mit einem Temperatursensor gemessen und unmittelbar an die Steuerung weitergegeben wird. Auf diese Weise können insbesondere auch Bedienfehler ausgeschlossen werden.

Das erfindungsgemäße Verfahren kann wahlweise zur intermittierenden Herstellung von Schlauchbeuteln oder zur kontinuierlichen Herstellung von Schlauchbeuteln genutzt werden. Die erfindungsgemäße Schlauchbeutelmaschine ist dadurch charakterisiert, dass in der Antriebssteuerung die aktuelle Umrechnungsfunktion zur Umrechnung der gewünschten Soll-Siegelkraft in das notwendige Antriebsmoment des Antriebmotors ausgewählt oder berechnet werden kann. Das heißt mit anderen Worten, dass entweder mehrere solche Umrechnungsfunktionen, die jeweils einer bestimmten Betriebstemperatur zugeordnet sind, in der Antriebssteuerung gespeichert und dann nach Feststellung der aktuellen Betriebstemperatur der Quersiegelbacken ausgewählt werden. Alternativ dazu kann in der Antriebssteuerung auch eine Berechnungsformel hinterlegt sein, mit der die Umrechnungsfunktion jeweils für die aktuelle Betriebstemperatur exakt abgeleitet werden kann.

Bevorzugt sollte die erfindungsgemäße Schlauchbeutelmaschine einen Temperatursensor aufweisen, mit dem die Betriebstemperatur der Quersiegelbacken gemessen werden kann. Diese aktuelle Betriebstemperatur wird dann automatisch an die Antriebssteuerung weitergeleitet und dort zur Auswahl bzw. zur Berechnung der aktuellen Umrechnungsfunktion genutzt.

Die erfindungsgemäße Schlauchbeutelmaschine kann entweder in der Art einer intermittierend arbeitenden Schlauchbeutelmaschine oder in der Art einer kontinuierlich arbeitenden Schlauchbeutelmaschine ausgebildet sein.

Eine Ausführungsform der Erfindung ist in den Zeichnungen schematisch dargestellt und wird nachfolgend beispielhaft erläutert.

Es zeigen:
**Fig. 1** die Quersiegeleinheit einer bekannten Schlauchbeutelmaschine in schematisierter seitlicher Ansicht;
**Fig. 2** ein Diagramm mit zwei Umrechnungsfunktionen zur Ermittlung des notwendigen Antriebsmoments eines Antriebsmotors aus der jeweils vorgegebenen Soll-Siegelkraft zwischen den Quersiegelbacken.

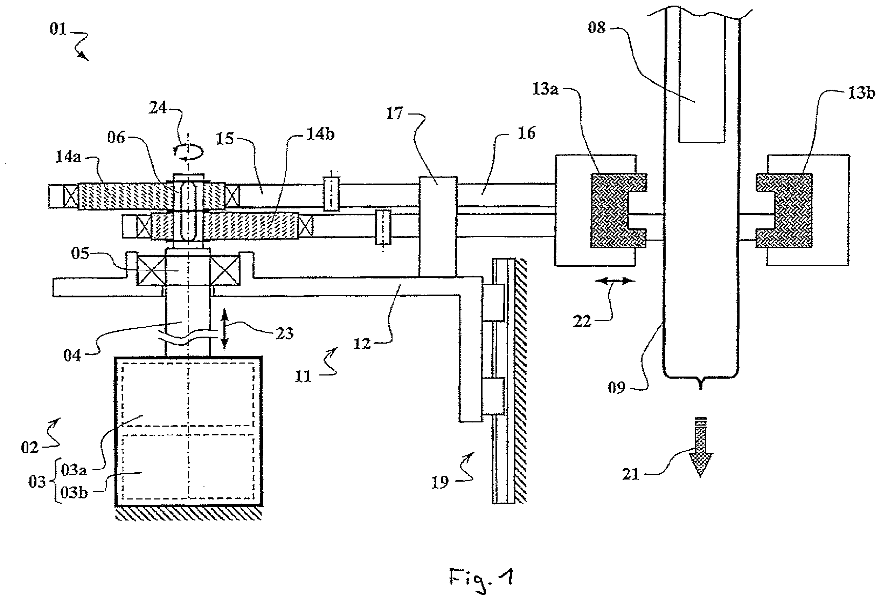

In **Fig. 1** ist die Quersiegeleinheit einer Schlauchbeutelmaschine mit zwei relativ zueinander beweglichen Quersiegelbacken 13a, und 13b beispielhaft skizziert.

Zu erkennen ist in Fig. 1 ein endlos erzeugter Folienschlauch 09, in dem ein Verpackungsgut mittels eines Einzelrohrs 08 eingefüllt werden kann. Der Folienschlauch 09 wird dabei in Förderrichtung 21 transportiert. Zur Erzeugung der einzelnen Schlauchbeutel wird der Folienschlauch 09 quergesiegelt. Dazu dienen die Quersiegelbacken 13a und 13b. Diese Quersiegelbacken 13a und 13b können in Querrichtung 22 quer zur Förderrichtung 21 aufeinander zu bzw. voneinander weg bewegt werden. In der Siegelstellung werden die Quersiegelbacken 13a und 13b gegeneinander gefahren, so dass der dazwischenliegende Folienschlauch 09 abhängig von der jeweils von den Quersiegelbacken 13a und 13b aufgebrachten Siegelkraft verpresst und durch Beheizen der Quersiegelbacken 13a und 13b verschweißt werden kann. Die Technik für das Quersiegeln von Schlauchbeuteln ist im Prinzip bekannt und bedarf keiner weiteren Erläuterung.

Die Quersiegelbacken 13a und 13b sind in der in Fig. 1 dargestellten Ausführungsform jeweils an Haltestangen 16 angeordnet, die in einer Haltestangenlagerung 17 in Querrichtung linear verschiebbar gelagert sind. Eine gegenläufige Bewegung der Quersiegelbacken 13a und 13b wird mittels einer Exzenteranordnung realisiert. Hierzu wird auf der Antriebswelle 04 an die Haltestange 16 ein Exzenterelement 14a und 14b drehfest angeschlagen. Am Exzenterelement 14a bzw. 14b ist wiederum ein Koppelelement 15 drehbar gelagert, welches schwenkbar mit der zugehörigen Haltestange 16 in Verbindung steht. Somit kann die rotierende Drehbewegung 24 der Antriebswelle 04 und zugleich die Exzenterelemente 14a und 14b und die alternierende Bewegung der jeweiligen Haltestange 16 und somit der Quersiegelbacken 13a und 13b übertragen werden.

Die Anordnung der Exzenterelemente 14a und 14b auf der Antriebswelle 04 bildet zusammen mit Koppelelement 15 und Haltestange 16 eine Übersetzungseinrichtung, welche die Drehbewegung 24 der Antriebswelle 24 in alternierende gegenläufige Bewegung der Quersiegelbacken 13a und 13b übersetzt. Die Übersetzungseinrichtung mit den Quersiegelbacken 13a und 13b ist Bestandteil der Quersiegeleinheit 11. Zum Antrieb der Antriebswelle 04 ist ein Antriebsmotor 02 mit einem Ständer 03a und einem Starter 03b vorgesehen. Der Antriebsmotor 02 ist dabei in der Art eines Antriebsmotors ausgebildet, bei dem die Ist-Stellung, nämlich der Drehwinkel ϕ, und das Ist-Drehmoment M mit einem entsprechenden Antriebsregler bzw. Stellungssensorik, die in Fig. 1 nicht dargestellt ist, gemessen werden kann. Mit dem Antriebsregler kann beispielsweise die Stromaufnahme des Antriebsmotors gemessen und aus diesem Wert das Antriebsmoment des Antriebsmotors unter Verwendung der Motorkennwerte abgeleitet werden.

Um die beiden Quersiegelbacken 13a und 13b mit einer vorgegebenen Soll-Siegelkraft zusammenzudrücken, muss der Antriebsmotor 02 ein bestimmtes Antriebsdrehmoment M aufbringen. Das aufgebrachte Drehmoment M des Antriebsmotors 02 kann dabei mittels einer Umrechnungsfunktion in die zwischen den Siegelbacken 13a und 13b wirkende Siegelkraft umgerechnet werden. Allerdings ist die mechanische Eigenschaft der Quersiegeleinheit mit der mechanischen Übersetzung zwischen dem Antriebsmotor 02 einerseits und den Quersiegelbacken 13a und 13b andererseits in ihrer Steifigkeit und in ihrem mechanischen Verhalten signifikant von der Betriebstemperatur der Quersiegelbacken 13a und 13b abhängig.

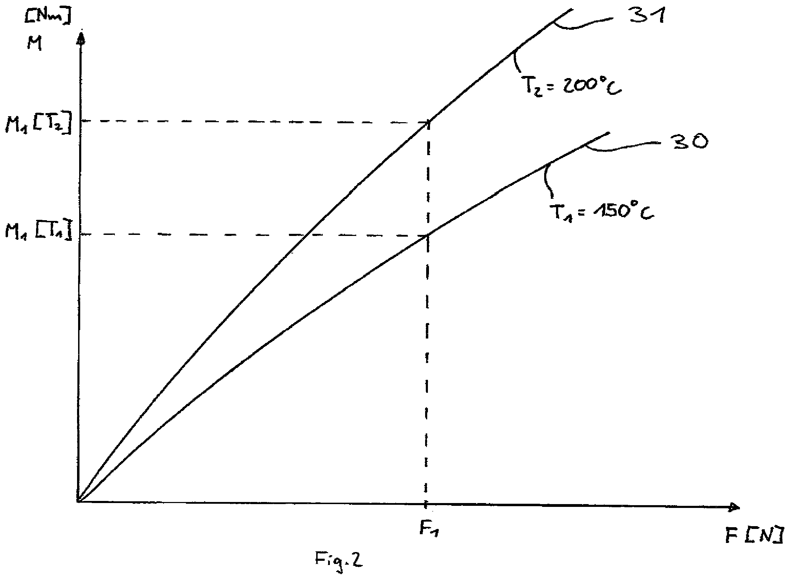

**Fig. 2** zeigt ein Diagramm mit den Funktionsgraphen zweier Umrechnungsfunktionen 30 und 31, die den Zusammenhang zwischen dem Antriebsmoment M des Antriebsmotors und der Siegelkraft F zwischen den Quersiegelbacken 13a und 13b beschreibt. Die Umrechnungsfunktion 30 ist dabei einer Betriebstemperatur der Quersiegelbacken 13a und 13b von 150 °C zugeordnet, wohingegen die Umrechnungsfunktion 31 einer Betriebstemperatur von 200 °C zugeordnet ist. Soll nun eine Soll-Siegelkraft F1 zwischen den Quersiegelbacken aufgebracht werden, so muss bei einer Betriebstemperatur von 150 °C ein aus der Umrechnungsfunktion 30 abgeleitetes Drehmoment M2 vom Antriebsmotor aufgebaut werden.

Liegt die Betriebstemperatur der Quersiegelbacken 13a und 13b dagegen bei einer Temperatur von 200 °C, muss zum Aufbau der Siegelkraft F1 ein Drehmoment M3 aufgebracht werden, das sich aus der Umrechnungsfunktion 31 ergibt. Die in Fig. 2 schematisiert dargestellten Umrechnungsfunktionen 30 und 31 und eventuell weitere Umrechnungsfunktionen für noch andere Betriebstemperaturen können in der Antriebssteuerung der Schlauchbeutelmaschine zwischengespeichert sein oder alternativ dazu auch jeweils neu berechnet werden. Wird nun mittels eines Sensors in den Quersiegelbacken 13a und 13b eine geänderte Betriebstemperatur festgestellt, so wird abhängig von der Änderung der Betriebstemperatur eine neue Umrechnungsfunktion ausgewählt bzw. berechnet und mit dieser neuen Umrechnungsfunktion die vom Bediener eingestellte Soll-Siegelkraft in das vom Antriebsmotor 02 aufzubringende Antriebsmoment umgerechnet. Auf diese Weise können unerwünschte Abweichungen der gewünschten Siegelkraft aufgrund der Änderung der Betriebstemperatur in den Quersiegelbacken ausgeschlossen werden.

## Patentansprüche

1. Verfahren zum Betrieb einer Schlauchbeutelmaschine, wobei die Schlauchbeutelmaschine eine Antriebsteuerung und mehrere elektronische Antriebseinheiten umfasst, die unabhängig voneinander von der Antriebsteuerung angesteuert werden und die verschiedene Funktionselemente der Verpackungsmaschine beim Abfahren von vordefinierten Bewegungsabläufen taktzeitsynchron antreiben, und wobei eine Antriebseinheit in der Art einer Quersiegeleinheit ausgebildet ist, und wobei die Quersiegeleinheit zumindest einen Antriebsmotors (02) und zwei vom Antriebsmotor (02) relativ zueinander antreibbaren Quersiegelbacken (13a, 13b) umfasst, mittels denen ein Folienschlauch (09) quer zur Förderrichtung (21) verschweißt werden kann, und wobei in der Antriebsteuerung zumindest Umrechnungsfunktionen gespeichert sind oder berechnet werden können, mit denen das Antriebsmoment und die Position des Antriebsmotors in die Siegelkraft zwischen den Quersiegelbacken (13a, 13b) umgerechnet werden können, wobei das Verfahren folgende Verfahrensschritte aufweist:
a) Feststellung der Betriebstemperatur der Quersiegelbacken (13a, 13b);
b) Auswahl oder Berechnung einer Umrechnungsfunktion (30, 31) in Abhängigkeit von der Betriebstemperatur;
c) Nutzung der temperaturabhängigen Umrechnungsfunktion (30, 31) bei der Berechnung des notwendigen Antriebsmoments des Antriebsmotors zur Erreichung einer gewünschten Soll-Siegelkraft zwischen den Quersiegelbacken (13a, 13b).

2. Verfahren nach Anspruch 1,
**dadurch gekennzeichnet,**
**dass** nach Feststellung der Betriebstemperatur zwei gespeicherte Umrechnungsfunktionen (30, 31) ausgewählt werden, deren jeweils zugeordnete Betriebstemperatur der festgestellten Betriebstemperatur am nächsten liegt, wobei bei der Berechnung des notwendigen Antriebsmoments und der Position zur Erreichung einer gewünschten Soll-Siegelkraft zwischen den beiden Umrechnungsfunktionen (30, 31) interpoliert wird.

3. Verfahren nach Anspruch 1 oder 2,
**dadurch gekennzeichnet,**
**dass** die Betriebstemperatur der Quersiegelbacken (13a, 13b) mit einem Temperatursensor gemessen wird.

4. Verfahren nach einem der Ansprüche 1 bis 3,
**dadurch gekennzeichnet,**
**dass** von den Antriebseinheiten ein Bewegungsablauf zur intermittierende Herstellung von Schlauchbeuteln abgefahren wird.

5. Verfahren nach einem der Ansprüche 1 bis 3,
**dadurch gekennzeichnet,**
**dass** von den Antriebseinheiten ein Bewegungsablauf zur kontinuierlichen Herstellung von Schlauchbeuteln abgefahren wird.

6. Schlauchbeutelmaschine zur Herstellung von Schlauchbeutelverpackungen, wobei die Schlauchbeutelmaschine eine Antriebsteuerung und mehrere elektronische Antriebseinheiten umfasst, die unabhängig voneinander von der Antriebsteuerung angesteuert werden und die verschiedene Funktionselemente der Verpackungsmaschine beim Abfahren von vordefinierten Bewegungsabläufen taktzeitsynchron antreiben, und wobei eine Antriebseinheit in der Art einer Quersiegeleinheit ausgebildet ist, und wobei die Quersiegeleinheit zumindest einen Antriebsmotors (02) und zwei vom Antriebsmotor (02) relativ zueinander antreibbaren Quersiegelbacken (13a, 13b) umfasst, mittels denen ein Folienschlauch (09) quer zur Förderrichtung (21) verschweißt werden kann,
**dadurch gekennzeichnet,**
**dass** in der Antriebsteuerung Umrechnungsfunktionen (30, 31) gespeichert sind oder berechnet werden können, mit denen das Antriebsmoment und die Position des Antriebsmotors in die Siegelkraft zwischen den Quersiegelbacken (13a, 13b) umgerechnet werden können,
wobei in der Antriebsteuerung die aktuelle Umrechnungsfunktion (30, 31) abhängig von der Betriebstemperatur der Quersiegelbacken (13a, 13b) auswählbar oder berechenbar ist.

7. Schlauchbeutelmaschine nach Anspruch 6,
**dadurch gekennzeichnet,**
**dass** die Betriebstemperatur der Quersiegelbacken (13a, 13b) mit einem Temperatursensor gemessen werden kann, um das zur Erreichung einer gewünschten Soll-Siegelkraft zwischen den Quersiegelbacken (13a, 13b) notwendige Antriebsmoment abhängig von der mit dem Temperatursensor gemessenen Betriebstemperatur der Quersiegelbacken (13a, 13b) berechnen zu können

8. Schlauchbeutelmaschine nach Anspruch 6 oder 7,
**dadurch gekennzeichnet,**
**dass** die Schlauchbeutelmaschine in der Art einer intermittierend arbeitenden Schlauchbeutelmaschine ausgebildet ist.

9. Schlauchbeutelmaschine nach Anspruch 6 oder 7,
**dadurch gekennzeichnet,**
**dass** die Schlauchbeutelmaschine in der Art einer kontinuierlich arbeitenden Schlauchbeutelmaschine ausgebildet ist.

## Claims

1. A method for operating a tubular bag machine, the tubular bag machine comprising a drive control system and multiple electronic drive units which are controlled independently of each other by the drive control system and which drive different functional elements of the packing machine in a cycle time-synchronous manner as they are going through predefined motion sequences, and one drive unit being realised in the manner of a transverse sealing unit, and the transverse sealing unit comprising at least one drive motor (02) and two transverse sealing jaws (13a, 13b) which are driven relative to each other by the drive motor (02) and by means of which a film tube (09) is sealed transversely to the conveying direction (21), and at least conversion functions by way of which the drive torque and the position of the drive motor can be converted into the sealing force between the transverse sealing jaws (13a, 13b) being stored or calculated in the drive control system,
the method comprising the following steps:
a) determining the operating temperature of the transverse sealing jaws (13a, 13b);
b) selecting or calculating a conversion function (30, 31) as a function of the operating temperature;
c) using the temperature-dependent conversion function (30, 31) in calculating the drive torque of the drive motor required to reach a desired target sealing force between the transverse sealing jaws (13a, 13b).

2. The method according to claim 1,
**characterised in that**
once the operating temperature has been determined, two stored conversion functions (30, 31) whose associated operating temperatures are closest to the determined operating temperature are selected, an interpolation being carried out between the two conversion functions (30, 31) when calculating the drive torque and the position required to reach a desired target sealing force.

3. The method according to claim 1 or 2,
**characterised in that**
the operating temperature of the transverse sealing jaws (13a, 13b) is measured using a temperature sensor.

4. The method according to any one of claims 1 to 3, **characterised in that**
the drive units go through a motion sequence for the intermittent production of tubular bags.

5. The method according to any one of claims 1 to 3, **characterised in that**
the drive units go through a motion sequence for the continuous production of tubular bags.

6. A tubular bag machine for producing tubular bags, the tubular bag machine comprising a drive control system and multiple electronic drive units which are controlled independently of each other by the drive control system and which drive different functional elements of the packing machine in a cycle time-synchronous manner as they are going through predefined motion sequences, and one drive unit being realised in the manner of a transverse sealing unit, and the transverse sealing unit comprising at least one drive motor (02) and two transverse sealing jaws (13a, 13b) which are driven relative to each other by the drive motor (02) and by means of which a film tube (09) is sealed transversely to the conveying direction (21), **characterised in that**
conversion functions (30, 31) by way of which the drive torque and the position of the drive motor can be converted into the sealing force between the transverse sealing jaws (13a, 13b) are stored or calculated in the drive control system,
the current conversion function (30, 31) being selected or calculated in the drive control system as a function of the operating temperature of the transverse sealing jaws (13a, 13b).

7. The tubular bag machine according to claim 6,
**characterised in that**
the operating temperature of the transverse sealing jaws (13a, 13b) can be measured using a temperature sensor in order to be able to calculate the drive torque required to reach a desired target sealing force between the transverse sealing jaws (13a, 13b) as a function of the operating temperature of the transverse sealing jaws (13a, 13b) measured using the temperature sensor.

8. The tubular bag machine according to claim 6 or 7, **characterised in that**
the tubular bag machine is realised in the manner of an intermittently operating tubular bag machine.

9. The tubular bag machine according to claim 6 or 7, **characterised in that**
the tubular bag machine is realized in the manner of a continuously operating tubular bag machine.

## Revendications

1. Procédé d'opération d'une ensacheuse, ladite ensacheuse comprenant un système de commande d'entraînement et plusieurs unités d'entraînement électroniques qui sont commandées indépendamment les unes des autres par le système de commande d'entraînement et qui entrainent des éléments fonctionnels différents de la machine à emballer de manière synchrone par rapport au temps de cycle lorsque des séquences de mouvement prédéfinies sont exécutées, et une unité d'entraînement étant réalisée à la manière d'une unité de scellage transversal, et ladite unité de scellage transversal comprenant au moins un moteur d'entraînement (02) et deux mâchoires de scellage transversal (13a, 13b) qui sont configurées pour être entraînées l'une par rapport à l'autre par le moteur d'entraînement (02) et au moyen desquelles un film tubulaire (09) est scellé transversalement par rapport au sens de convoyage (21), et au moins des fonctions de conversion étant stockées ou calculables dans le système de commande d'entraînement, le couple d'entraînement et la position du moteur d'entraînement pouvant être convertis en la force de scellage entre les mâchoires de scellage transversal (13a, 13b) à l'aide desdites fonctions de conversion,
ledit procédé comportant les étapes suivantes :
a) déterminer la température de fonctionnement des mâchoires de scellage transversal (13a, 13b) ;
b) sélectionner ou calculer une fonction de conversion (30, 31) en fonction de la température de fonctionnement ;
c) utiliser la fonction de conversion (30, 31) qui dépend de la température pour calculer le couple d'entraînement du moteur d'entraînement nécessaire pour atteindre une force de scellage de consigne désirée entre les mâchoires de scellage transversal (13a, 13b).

2. Procédé selon la revendication 1,
**caractérisé en ce**
**qu'**après la détermination de la température de fonctionnement, deux fonctions de conversion (30, 31) stockées dont les températures de fonctionnement associées sont les plus proches de la température de fonctionnement déterminée sont sélectionnées, une interpolation étant effectuée entre les deux fonctions de conversion (30, 31) pendant le calcul du couple d'entraînement et de la position nécessaires pour atteindre une force de scellage de consigne désirée.

3. Procédé selon la revendication 1 ou 2,
**caractérisé en ce que**
la température de fonctionnement des mâchoires de scellage transversal (13a, 13b) est mesurée à l'aide d'un capteur de température.

4. Procédé selon l'une quelconque des revendications 1 à 3, **caractérisé en ce**
**qu'**une séquence de mouvement est exécutée par les unités d'entraînement pour la fabrication intermittente de sachets tubulaires.

5. Procédé selon l'une quelconque des revendications 1 à 3, **caractérisé en ce**
**qu'**une séquence de mouvement est exécutée par les unités d'entraînement pour la fabrication continue de sachets tubulaires.

6. Ensacheuse destinée à produire des emballages en forme de sachets tubulaires, ladite ensacheuse comprenant un système de commande d'entraînement et plusieurs unités d'entraînement électroniques qui sont commandées indépendamment les unes des autres par le système de commande d'entraînement et qui entrainent des éléments fonctionnels différents de la machine à emballer de manière synchrone par rapport au temps de cycle lorsque des séquences de mouvement prédéfinies sont exécutées, et une unité d'entraînement étant réalisée à la manière d'une unité de scellage transversal, et ladite unité de scellage transversal comprenant au moins un moteur d'entraînement (02) et deux mâchoires de scellage transversal (13a, 13b) qui sont configurées pour être entraînées l'une par rapport à l'autre par le moteur d'entraînement (02) et au moyen desquelles un film tubulaire (09) est scellé transversalement par rapport au sens de convoyage (21),
**caractérisée en ce que**
des fonctions de conversion (30, 31) sont stockées ou peuvent être calculées dans le système de commande d'entraînement, le couple d'entraînement et la position du moteur d'entraînement pouvant être convertis en la force de scellage entre les mâchoires de scellage transversal (13a, 13b) à l'aide desdites fonctions de conversion,
la fonction de conversion (30, 31) courante pouvant être sélectionnée ou calculée dans le système de commande d'entraînement en fonction de la température de fonctionnement des mâchoires de scellage transversal (13a, 13b).

7. Ensacheuse selon la revendication 6,
**caractérisée en ce que**
la température de fonctionnement des mâchoires de scellage transversal (13a, 13b) peut être mesurée à l'aide d'un capteur de température afin d'être capable de calculer le couple d'entraînement nécessaire pour atteindre une force de scellage de consigne désirée entre les mâchoires de scellage transversal (13a, 13b) en fonction de la température de fonctionnement des mâchoires de scellage transversal (13a, 13b) mesurée à l'aide du capteur de température.

8. Ensacheuse selon la revendication 6 ou 7,
**caractérisée en ce que**
l'ensacheuse est réalisée à la manière d'une ensacheuse fonctionnant de façon intermittente.

9. Ensacheuse selon la revendication 6 ou 7,
**caractérisée en ce que**
l'ensacheuse est réalisée à la manière d'une ensacheuse fonctionnant de façon continue.
